(19) **Europäisches Patentamt European Patent Office Office européen des brevets**

(11) **EP 4 384 370 B1**

(12) **FASCICULE DE BREVET EUROPEEN**

(45) Date de publication et mention de la délivrance du brevet:
**30.04.2025 Bulletin 2025/18**

(21) Numéro de dépôt: **22757988.5**

(22) Date de dépôt: **03.08.2022**

(51) Classification Internationale des Brevets (IPC):
**B29C 51/08** *(2006.01)*  **B29C 51/10** *(2006.01)*
**B29C 51/00** *(2006.01)*  **B29C 51/26** *(2006.01)*
**B29C 51/42** *(2006.01)*  **G10K 11/172** *(2006.01)*
**B32B 38/12** *(2006.01)*  **B32B 3/28** *(2006.01)*
**B32B 3/26** *(2006.01)*  **B29C 51/02** *(2006.01)*
**B29L 31/60** *(2006.01)*  **B29L 9/00** *(2006.01)*
**B29L 31/00** *(2006.01)*

(52) Classification Coopérative des Brevets (CPC):
**B29C 51/082; B29C 51/006; B29C 51/10; B29C 51/266; B29C 51/428; G10K 11/172;** B29C 51/02; B29L 2009/00; B29L 2031/60; B29L 2031/721

(86) Numéro de dépôt international:
**PCT/FR2022/051552**

(87) Numéro de publication internationale:
**WO 2023/017222 (16.02.2023 Gazette 2023/07)**

(54) **PROCEDE DE FABRICATION D'UN COMPOSANT ACOUSTIQUE A PAROI DE FAIBLE EPAISSEUR**

VERFAHREN ZUR HERSTELLUNG EINES DÜNNWANDIGEN AKUSTISCHEN BAUTEILS

METHOD FOR MAKING A THIN-WALLED ACOUSTIC COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.08.2021 FR 2108589**

(43) Date de publication de la demande:
**19.06.2024 Bulletin 2024/25**

(73) Titulaire: **SAFRAN**
**75015 Paris (FR)**

(72) Inventeurs:
• **LANFANT, Pierre, Nicolas**
**77550 Moissy-Cramayel (FR)**
• **ALGLAVE, Hugues, Laurent**
**77550 Moissy-Cramayel (FR)**
• **DUNLEAVY, Patrick**
**77550 Moissy-Cramayel (FR)**

(74) Mandataire: **Cabinet Beau de Loménie**
**158, rue de l'Université**
**75340 Paris Cedex 07 (FR)**

(56) Documents cités:
**DE-B1- 1 779 463**  **DE-T5- 112015 000 089**
**FR-A1- 2 881 674**  **FR-A1- 3 082 987**
**US-A- 4 039 609**  **US-A1- 2003 047 565**
**US-A1- 2004 198 123**

## Description

### Domaine Technique

La présente invention se rapporte au domaine général des structures ou panneaux d'atténuation acoustiques. Elle concerne plus particulièrement les structures d'atténuation acoustiques utilisées pour réduire les bruits produits dans les moteurs d'avion comme dans les turbines à gaz ou échappement de ceux-ci.

### Technique antérieure

Les structures d'atténuation acoustique sont typiquement constituées d'une plaque ou peau de surface acoustique perméable aux ondes acoustiques que l'on souhaite atténuer et d'une plaque ou peau pleine réfléchissante dite « plaque de fermeture », un corps cellulaire, tel qu'un nid d'abeille ou une structure poreuse, étant disposé entre ces deux parois. De façon bien connue, de tels panneaux forment des résonateurs de type Helmholtz qui permettent d'atténuer dans une certaine gamme de fréquences les ondes acoustiques. Des structures d'atténuation acoustique de ce type sont notamment décrites dans les documents US 5 912 442 et GB 2 314 526.

Ces structures d'atténuation acoustique sont limitées à des formes de cellules simples telles que celles des alvéoles d'une structure classique de type NIDA®. Avec cette technologie, la fréquence traitée est de l'ordre du quart de l'inverse de la hauteur de cavité. Pour traiter des basses fréquences, il faut donc des cavités très hautes qui, dans le cas de systèmes propulsifs, augmentent considérablement leur trainée. En outre, les performances acoustiques obtenues sont limitées à l'absorption d'une gamme de fréquences très étroite.

Une solution pour augmenter la gamme de fréquence d'atténuation acoustique est de superposer deux corps cellulaires ayant des formes et des dimensions de cellules différentes. Cette solution présente l'inconvénient d'augmenter significativement l'encombrement et la trainée de la structure d'atténuation acoustique.

Une autre solution connue consiste à placer des troncs de cône ouverts dans des alvéoles comme décrits dans les documents EP 0 738 865 et FR 3 082 987. Si cette solution permet de réduire l'encombrement de la structure d'atténuation acoustique, la masse de la structure reste cependant importante et, par conséquent, pénalisante pour des utilisations dans des aéronefs où la maîtrise de la masse globale est toujours recherchée.

Le document DE 11 2015 000089 T5 décrit un procédé de fabrication d'un absorbeur de choc pour un véhicule comprenant une pluralité d'éléments creux ayant chacune une forme se rétrécissant progressivement entre une base et un sommet, les éléments complexes creux étant reliés les uns aux autres par un ou plusieurs bords adjacents, le procédé comprenant :- le chauffage d'un film en matériau thermoplastique,- la mise en forme du film en matériau thermoplastique chauffé dans un outillage comprenant un moule ayant une pluralité de cavités de moulage présentant une forme correspondant à la forme des éléments acoustiques complexes creux du composant acoustique à fabriquer, le film en matériau thermoplastique chauffé étant mis en forme localement dans chacune des cavités de moulage,- le refroidissement du moule à une troisième température inférieure à la température de transition vitreuse ou de fusion du matériau thermoplastique,- le démoulage d'un panneau multi-éléments complexes comprenant une pluralité d'éléments acoustiques complexes creux.

### Exposé de l'invention

La présente invention a donc pour but principal de proposer une solution pour des structures d'atténuation acoustique qui ne présentent pas les inconvénients précités. Conformément à l'invention, ce but est atteint grâce à un procédé de fabrication d'un composant acoustique comprenant une pluralité d'éléments acoustiques complexes creux ayant chacune une forme se rétrécissant progressivement entre une base et un sommet, les éléments acoustiques complexes creux étant reliés les uns aux autres par un ou plusieurs bords adjacents, le procédé comprenant :

- le chauffage d'un film en matériau thermoplastique à une première température supérieure à la température de transition vitreuse ou de fusion du matériau thermoplastique dudit film,
- la mise en forme du film en matériau thermoplastique chauffé dans un outillage comprenant un moule ayant une pluralité de cavités de moulage présentant une forme correspondant à la forme des éléments acoustiques complexes creux du composant acoustique à fabriquer, le film en matériau thermoplastique chauffé étant mis en forme localement dans chacune des cavités de moulage, au moins le moule étant maintenu à une deuxième température supérieure à la température de transition vitreuse ou de fusion du matériau thermoplastique et inférieure à la première température,
- le refroidissement du moule à une troisième température inférieure à la température de transition vitreuse ou de fusion du matériau thermoplastique,
- le démoulage d'un panneau multiéléments acoustiques complexes comprenant une pluralité d'éléments acoustiques complexes creux.

Le procédé de l'invention permet d'obtenir de façon économique, fiable et répétable des composants acoustiques équipés d'éléments acoustiques de forme complexes avec une épaisseur de paroi très faible typiquement inférieure à 1mm. Le composant acoustique ainsi obtenu permet la fabrication de structures d'atténuation acoustiques plus minces donc plus légères tout en respectant les spécifications requises en matière d'encombrement, performances mécaniques et de masse.

Par ailleurs, lors de l'étape de mise en forme, le moule est maintenu à une deuxième température supérieure à la température de transition vitreuse ou de fusion du matériau thermoplastique et inférieure à la première température. Comme expliqué ci-après en détails, cela permet de former des éléments acoustiques complexes creux avec des parois de très faibles épaisseurs.

Selon un premier aspect particulier du procédé de l'invention, le film en matériau thermoplastique présente une épaisseur constante.

Selon un deuxième aspect particulier du procédé de l'invention, le film en matériau thermoplastique présente une pluralité de portions de surépaisseur présentes à des emplacements déterminés sur le film, lesdits emplacements correspondant aux emplacements des cavités de moulage du moule. Le volume de matière présent dans chaque portion de surépaisseur est défini en fonction de l'épaisseur de paroi de chaque élément acoustique complexe à fabriquer.

Selon un troisième aspect particulier du procédé de l'invention, les cavités de moulage présentent une forme pyramidale, conique, en spirale, en entonnoir ou en trémie.

Selon un quatrième aspect particulier du procédé de l'invention, celui-ci comprend en outre une étape de fabrication d'un film en matériau thermoplastique à partir de granulés en matériau thermoplastique.

Selon un cinquième aspect particulier du procédé de l'invention, le film en matériau thermoplastique est obtenu par empilement et/ou soudure de plusieurs films unitaires raboutés entre eux.

Selon un sixième aspect particulier du procédé de l'invention, lequel les éléments acoustiques complexes (121) du composant acoustique (120) ont une épaisseur de paroi inférieure à 1mm.

L'invention a également pour objet un procédé de fabrication d'une structure d'atténuation acoustique comprenant les étapes suivantes :

- réalisation d'un composant acoustique selon le procédé de fabrication d'un composant acoustique de l'invention,
- réalisation d'un panneau multiéléments acoustiques complexes comprenant le composant acoustique et une pluralité de cloisons formant des cavités acoustiques, chaque élément acoustique complexe du composant acoustique étant logé dans une cavité acoustique de manière à former une cellule acoustique,
- assemblage d'une face du panneau multiéléments acoustiques complexes avec une face d'assemblage d'une peau acoustique.

Les éléments acoustiques complexes creux du composant acoustique peuvent être avantageusement associés avec des cloisons, ce qui permet d'abaisser les fréquences acoustiques à traiter. Il est ainsi possible de réaliser des structures d'atténuation acoustique aptes à atténuer des ondes sonores à plus basses fréquence tout en présentant un encombrement réduit.

Selon un aspect particulier du procédé de fabrication d'une structure d'atténuation acoustique, la structure d'atténuation acoustique comprend en outre une peau de fermeture recouvrant la face horizontale du panneau multiéléments acoustiques complexes opposée à la face horizontale recouverte par la peau acoustique, le procédé comprenant l'assemblage de la pièce réunissant le panneau multiéléments acoustiques complexes et la pluralité de cloisons avec la peau de fermeture.

Brève description des dessins

[Fig. 1] La figure 1 est une vue schématique en coupe d'un outillage de thermoformage montrant une étape de fabrication d'un composant acoustique selon un mode de réalisation de l'invention,

[Fig. 2] La figure 2 est une vue schématique en coupe d'un outillage de thermoformage montrant une autre étape de fabrication d'un composant acoustique selon un mode de réalisation de l'invention,

[Fig. 3] La figure 3 est une vue schématique en coupe d'un outillage de thermoformage montrant une autre étape de fabrication d'un composant acoustique selon un mode de réalisation de l'invention,

[Fig. 4] La figure 4 est une vue schématique en coupe d'un outillage de thermoformage montrant une autre étape de fabrication d'un composant acoustique selon un mode de réalisation de l'invention,

[Fig. 5] La figure 5 est une vue schématique en perspective d'un film en matériau thermoplastique utilisé pour fabriquer un composant acoustique selon un mode de réalisation de l'invention,

[Fig. 6] La figure 6 est une vue schématique en perspective d'un film en matériau thermoplastique utilisé pour fabriquer un composant acoustique selon un autre mode de réalisation de l'invention,

[Fig. 7] La figure 7 est une vue de détail agrandie d'une partie du film en matériau thermoplastique de la figure 6,

[Fig. 8] La figure 8 est une vue schématique éclatée en perspective d'une structure d'atténuation acoustique selon un mode de réalisation de l'invention,

[Fig. 9] La figure 9 est une vue schématique en coupe de la structure d'atténuation acoustique de la figure 1 une fois assemblée.

Description des modes de réalisation

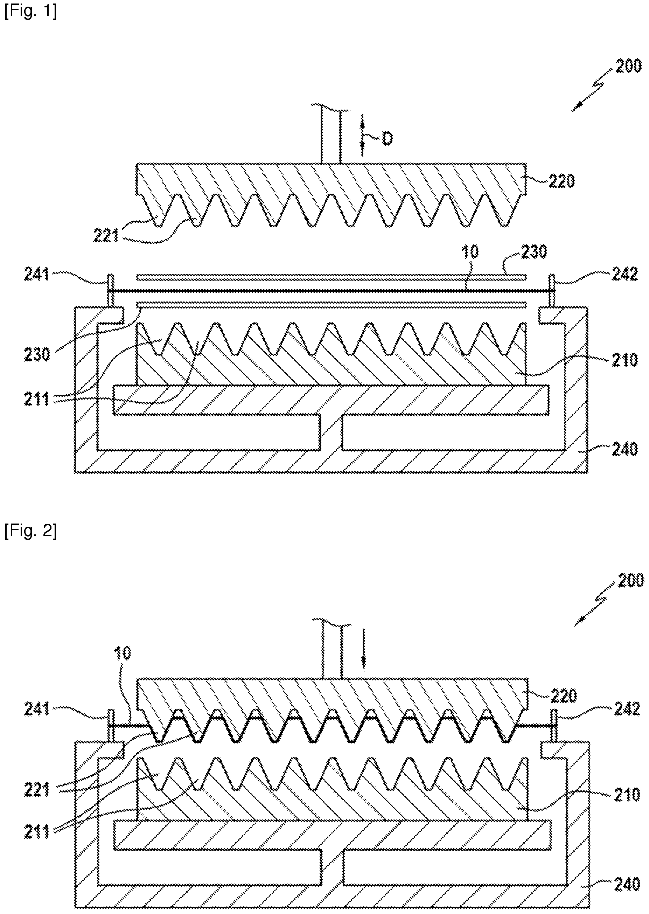

Les figures 1 à 4 illustrent un procédé de fabrication d'un composant acoustique conformément à un mode de réalisation de l'invention.

La figure 1 illustre un outillage de thermoformage 200 comprenant un moule 210, un contre-moule 220 mobile suivant une double direction D, des panneaux chauffants 230 et un bâti 240 supportant le moule 210. Le bâti 240 est muni de serre-flancs 241 et 242 pour maintenir un film en matériau thermoplastique 10 pendant les étapes de formation d'un composant acoustique. Le film en matériau thermoplastique peut également être déposé sur l'outillage par un automate ou manuellement. Il peut être également être apporté par un système de convoyage.

Le moule 210 comprend des cavités de moulage 211 destinées à coopérer avec des dents 221 pour la formation du composant acoustique à partir du film en matériau thermoplastique 10. Les cavités de moulage 211 du moule 210 présentent une forme correspondant à la forme des éléments acoustiques complexes creux du composant acoustique à fabriquer.

Le procédé débute par le chauffage par les panneaux chauffants 230 du film en matériau thermoplastique 10 à une première température supérieure à la température de transition vitreuse ou de fusion du matériau thermoplastique du film comme illustré sur la figure 1. Plus précisément, dans le cas d'un matériau thermoplastique amorphe, le film est chauffé à une température supérieure à la température de transition vitreuse du matériau tandis que, dans le cas d'un matériau thermoplastique semi-cristallin, le film est chauffé à une température supérieure à la température de fusion du matériau.

Selon une variante de mise en œuvre, le film en matériau thermoplastique peut être chauffé à la première température supérieure à la température de transition vitreuse ou de fusion du matériau thermoplastique du film avant son placement au-dessus du moule, par exemple en chauffant le flanc du film dans un four infrarouge.

Le film est chauffé à la première température de préférence après son placement au-dessus du moule car cela permet un meilleur positionnement du film dans l'outillage de thermoformage.

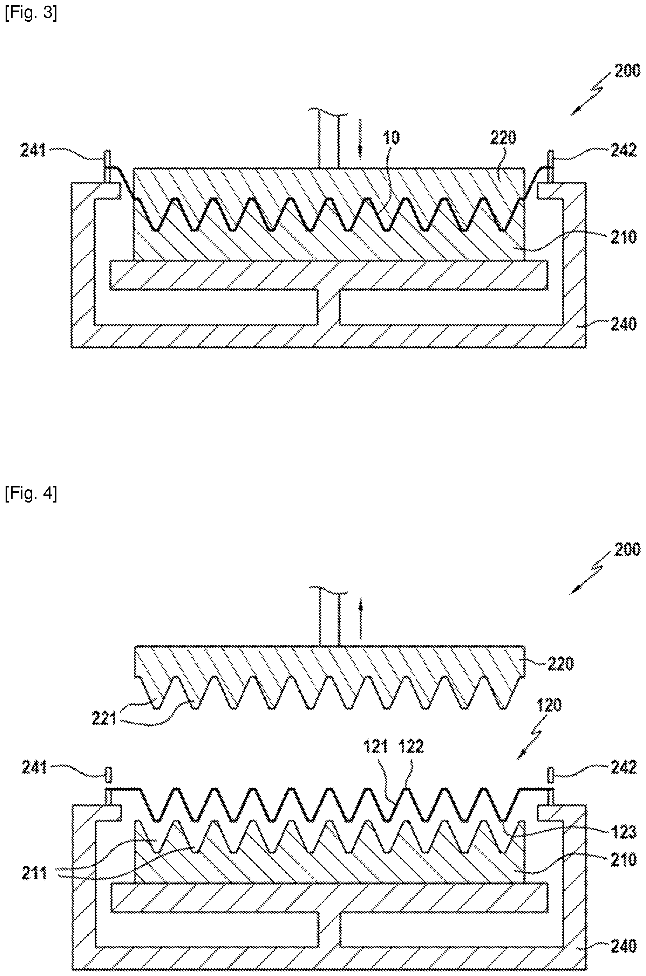

Une fois cette première température atteinte par le film, on procède à la mise en forme du film en matériau thermoplastique 10. A cet effet, le contre-moule 220 est déplacé en direction du moule 210 comme illustré sur la figure 2 et jusqu'à ce que les dents 221 du contre-moule 220 coopèrent complètement avec les cavités de moulage 211 comme représentées sur la figure 3. Le film en matériau thermoplastique chauffé est mis en forme localement dans chacune des cavités de moulage 211. Lors de cette étape de mise en forme, le moule 210 et, éventuellement le contre-moule 220, sont de préférence maintenus à une deuxième température supérieure à la température de transition vitreuse ou de fusion du matériau thermoplastique et inférieure à la première température.

Cela permet de former des éléments acoustiques complexes creux avec des parois de très faibles épaisseurs. En effet, en maintenant l'outillage de thermoformage à une température supérieure à la température de transition vitreuse ou de fusion du matériau thermoplastique, on facilite les flux de matière lors de la mise en forme par emboutissage du film. On évite ainsi de déchirer le film en matériau thermoplastique qui présente initialement une épaisseur déjà relativement faible, par exemple de l'ordre de 1mm à 2mm.

Une fois le film en matériau plastique 10 complètement déformé dans les cavités 210 comme illustré sur la figure 3, le moule 210 et, éventuellement le contre-moule 220, sont refroidis à une troisième température inférieure à la température de transition vitreuse ou de fusion du matériau thermoplastique permettant de figer ledit matériau dans la forme d'un composant acoustique 120 à fabriquer. Dès lors que la température de l'outillage de thermoformage est inférieure à au moins 10°C de la température de transition vitreuse ou de fusion du matériau thermoplastique, le composant acoustique formé peut être démoulé.

On procède ensuite au démoulage du composant acoustique 120 par déplacement du contre-moule 220 dans une direction opposée à celle du moule 210 et par ouverture des serre-flancs afin de libérer le composant acoustique.

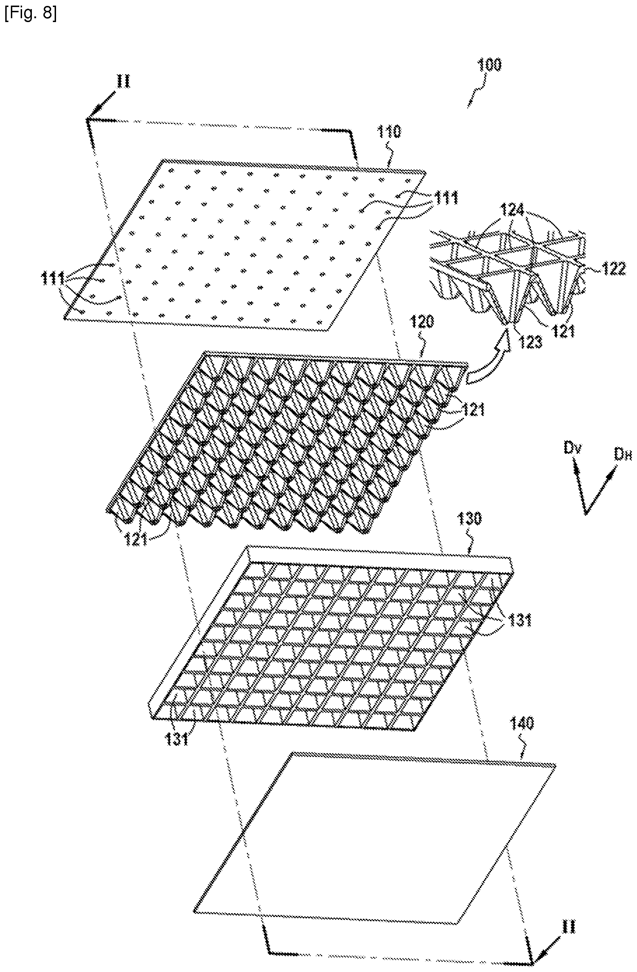

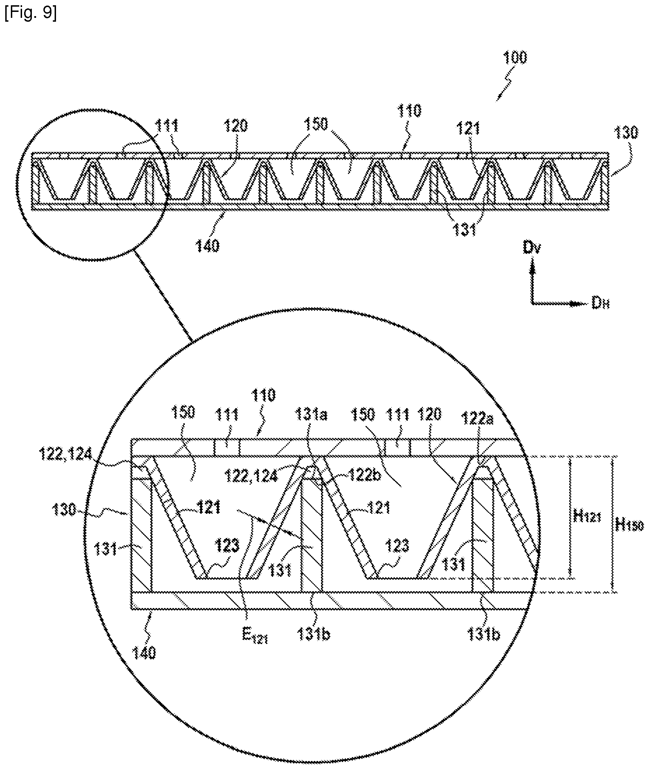

On obtient alors un composant acoustique 120 tel qu'illustré aux figures 8 et 9 comprenant une pluralité d'éléments acoustiques complexes creux 121 ayant chacune une forme se rétrécissant progressivement entre une base 122 et un sommet 123 et une épaisseur de paroi $E_{121}$ inférieure à 1mm (figure 9). La forme des cavités de moulage du moule définit la forme des éléments acoustiques complexes creux du composant acoustique. Dans l'exemple décrit ici, les cavités de moulage 211 présentent une forme pyramidale permettant de former des éléments acoustiques complexes creux 121 de même forme. Les cavités de moulage et, par conséquent, les éléments acoustiques complexes creux résultants peuvent avoir d'autres formes telles qu'une forme conique, en spirale, en entonnoir ou en trémie.

Dans l'exemple décrit précédemment, le composant acoustique est mis en forme par thermoformage entre un moule et un contre-moule. Cette méthode de thermoformage correspond à la technique d'estampage ou d'emboutissage par moule mâle et femelle, aussi appelé « positif et négatif ».

Cependant, la mise en forme du composant acoustique à partir d'un film en matériau thermoplastique chauffé peut être obtenue par d'autres méthodes telles que notamment :

- le thermoformage par le vide, méthode dans laquelle un vide, créé entre la matière et le moule, force la matière à épouser la forme du moule sous l'effet de la pression atmosphérique (environ 1 bar) ;

- le thermoformage sous pression ou soufflage, méthode dans laquelle la mise en forme est assurée par une pression chassant l'air entre la matière et le moule.

D'une manière générale, tout procédé permettant de chauffer un film en matériau thermoplastique et de le plaquer sur un moule à la forme du composant acoustique à fabriquer peut être utilisé.

En outre, conformément à l'invention et quel que soit l'outillage utilisé, celui-ci doit comprendre des moyens pour réguler au moins la température du moule afin de le maintenir à la deuxième température décrite précédemment lors de la mise en forme du film en matériau thermoplastique. A cet effet, l'outillage peut comprendre des moyens de régulation thermique utilisant par exemple l'induction ou l'air pulsé, la régulation thermique pouvant être pilotée par zone dans l'outillage. L'outillage et en particulier le moule est de préférence réalisé avec un métal ayant une forte capacité de transfert thermique comme par exemple de l'aluminium.

Le matériau thermoplastique du film utilisé pour fabriquer le composant acoustique peut être notamment mais pas exclusivement sélectionné parmi les matériaux suivants : les polyaryléthercétones (PAEK) tels que le polyétheréthercétone (PEEK) et le polyéthercétonecétone (PEKK), les polyétherimides (PEI), le polycarbonate (PC), le polysulfure de phénylène (PPS), les polysulfones (PSU). Le matériau thermoplastique peut être chargé ou non.

Le composant acoustique fabriqué selon le procédé de l'invention peut avoir une forme plane comme le composant acoustique 120 illustré aux figures 8 et 9 ou une forme courbée présentant une courbure simple ou multiple. Dans ce dernier cas, la ou les courbures peuvent être réalisées directement lors de la mise en forme du film avec un moule ayant une géométrie adaptée ou après l'étape de mise en forme par conformation ou formage à chaud. Concernant la conformation ou le formage à chaud du composant acoustique après sa mise en forme, cette opération peut être réalisée en rapportant le composant plan sur un outillage présentant la ou les courbures, l'outillage comprenant des moyens de chauffage pour chauffer le composant à une température supérieure à la température de transition vitreuse du matériau thermoplastique et des moyens pour appliquer un effort uniforme sur le composant.

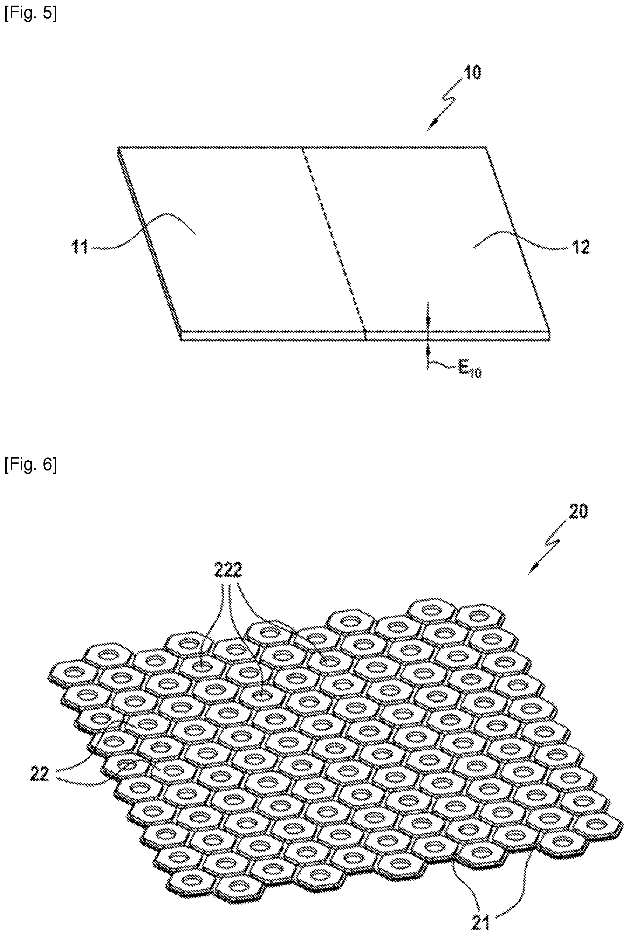

Le film en matériau thermoplastique utilisé pour fabriquer le composant acoustique peut présenter une épaisseur constante comme le film 10 illustré à la figure 5. Le film peut être réalisé en une seule pièce ou obtenu par soudure de plusieurs films unitaires raboutés entre eux comme les films unitaires 11 et 12 de la figure 5 qui, une fois soudés, forme un film en matériau thermoplastique 10 d'épaisseur constante $E_{10}$. Le film en matériau thermoplastique peut être fabriqué à partir de granulés en matériau thermoplastique par injection ou toute autre méthode adaptée à la formation d'un film.

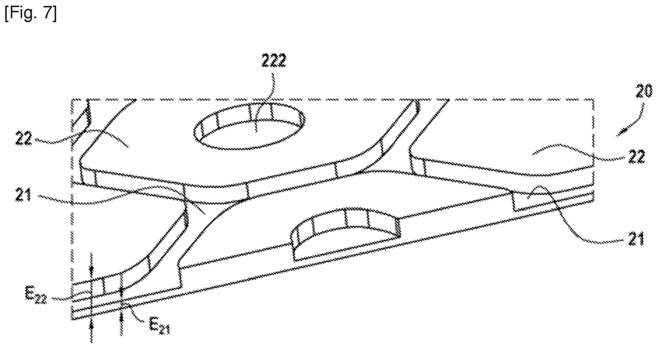

Le film en matériau thermoplastique utilisé pour fabriquer le composant acoustique peut également présenter une épaisseur variable comme le film 20 illustré aux figures 6 et 7. Plus précisément, le film en matériau thermoplastique 20 présente une pluralité de portions de surépaisseur 22 présentant une épaisseur $E_{22}$ supérieure à l'épaisseur $E_{21}$ des portions de liaison 21 du film 20 présentes entre les portions de surépaisseur 22 (figure 7). Les portions de surépaisseur 22 sont présentes à des emplacements déterminés sur le film, ces emplacements correspondant aux emplacements des cavités de moulage du moule. Les portions de surépaisseur 22 constituent un surplus de matière qui, une fois étiré ou flué dans les cavités de moulage lors de la mise en forme du composant acoustique, vont permettre de former des d'éléments acoustiques complexes creux avec une épaisseur de paroi proche de celle des portions de liaison 21. Le volume de matière présent dans chaque portion de surépaisseur est défini en fonction de l'épaisseur de paroi de chaque élément acoustique complexe à fabriquer. Les portions de surépaisseur peuvent présenter une forme circulaire, annulaire ou hexagonale et être réparties uniformément sur le film. Dans l'exemple décrit ici, chaque portion de surépaisseur 22 s'étend entre des portions de liaison 21 et une ouverture ou cavité 222 présente au centre de la portion de surépaisseur. Chaque ouverture ou cavité 222 est destinée à être alignée avec le centre des cavités de moulage du moule. Selon une caractéristique particulière, l'ouverture ou cavité centrale 222 forme un trou. Cela permet d'obtenir l'orifice de sortie de chaque élément acoustique complexe immédiatement après la mise en forme. On évite ainsi, une opération supplémentaire d'usinage. Le diamètre de l'ouverture ou cavité 222 est de préférence supérieure au diamètre de l'extrémité des dents 221 du contre-moule 220. A titre d'exemple non limitatif, dans le cas où le diamètre de l'extrémité des dents du contre-moule est de 5mm, le trou formé par l'ouverture centrale présente un diamètre compris entre 6mm et 7mm.

Chaque portion de surépaisseur est destinée à former par étirement ou fluage un élément acoustique complexe creux 121 ayant une forme se rétrécissant progressivement entre sa base 122 et son sommet 123. On passe donc d'une surface plane initiale Spl correspondant à la portion de surépaisseur qui s'étend entre des portions de liaison 21 et l'ouverture ou cavité centrale 222, à une surface projetée Spr plus grande correspondant à la surface de l'élément acoustique complexe creux 121. Le rapport entre la surface plane initiale Spl et la surface projetée Spr définit un facteur d'élancement Fe qui peut être entre 2 et 5. Le principe est celui de la conservation de masse. Ainsi, la surface plane initiale Spl et l'épaisseur $E_{22}$ initiales de chaque portion de surépaisseur 22 est définie en fonction de la surface projetée Spr et de l'épaisseur $E_{121}$ finales de chaque élément acoustique complexe creux 121 selon la formule suivante :

$$Spl \times E_{22} = Spr \times E_{121}$$

Dans le cas où on souhaite réaliser un composant acoustique d'épaisseur constante Ec, l'épaisseur $E_{22}$ de la surépaisseur 22 peut être déterminée selon la formule suivante :

$$E_{22} = (Spr / Spl) \times Ec = Fe \times Ec$$

Dans ce cas, l'épaisseur $E_{21}$ des portions de liaison 21 qui ne sont pas destinées à être étirées ou fluées correspond sensiblement à l'épaisseur finale du composant acoustique 120.

A titre d'exemple non limitatif, l'épaisseur $E_{21}$ des portions de liaison 21 peut par exemple être de 0,5mm tandis que l'épaisseur $E_{22}$ des portions de surépaisseur 22 peut être de 1,6mm.

Un tel film en matériau thermoplastique à épaisseur variable peut être fabriqué par calandrage, usinage, empilement de fils unitaires, moulage par injection, etc.

On décrit maintenant en relation avec les figures 8 et 9 un procédé de fabrication d'une structure d'atténuation acoustique conformément à un mode de réalisation de l'invention. La structure d'atténuation acoustique 100 comprend ici une peau ou plaque acoustique 110, un composant acoustique 120 fabriqué comme décrit précédemment, une pluralité de cloisons 131 et une peau ou plaque de fermeture 140.

La peau de fermeture 140 correspond à une surface pleine destinée à réfléchir les ondes sonores entrant dans la structure d'atténuation acoustique. La peau de fermeture peut être un élément constitutif de la structure d'atténuation acoustique comme dans l'exemple décrit ici ou correspondre à une structure d'un objet, par exemple un moteur d'avion. Dans ce dernier cas, la structure d'atténuation acoustique de l'invention ne comporte pas de peau de fermeture et est directement montée sur la structure de l'objet.

La peau acoustique 110 a pour fonction de laisser passer les ondes sonores à atténuer à l'intérieur de la structure d'atténuation acoustique 100. A cet effet et dans l'exemple décrit ici, la peau acoustique 110 comprend une pluralité de perforations 111.

Le composant acoustique 120 est formé en une seule pièce et s'étend en longueur et en largeur suivant une direction horizontale $D_H$ et en hauteur suivant une direction verticale $D_V$. Le composant acoustique comprend une pluralité d'éléments acoustiques complexes creux 121 ayant chacune une forme se rétrécissant progressivement entre une base 122 et un sommet 123.

Dans l'exemple décrit ici, les éléments acoustiques complexes 121 présentent une forme pyramidale.

La base 122 de chaque élément acoustique complexe121 est en contact continu avec la base des éléments acoustiques complexes adjacents de manière à former un réseau continu de bords 124.

Dans l'exemple de réalisation décrit ici, la pluralité de cloisons 131 est réalisée en une seule pièce, à savoir un réseau de nervures 130 qui une fois assemblé avec le panneau multiéléments acoustiques complexes 120 forme les cloisons autour des éléments acoustiques complexes 121.

Toujours dans l'exemple décrit ici, la structure d'atténuation acoustique 100 est réalisée en assemblant le panneau multiéléments acoustiques complexes 120 avec la pluralité de cloisons 131 en une seule pièce, le bord supérieur 131a des cloisons 131 étant fixés, par exemple par collage ou soudage, sur la portion inférieure 122b des bases 122 des éléments acoustiques complexes 121 (figure 9). La pluralité d'éléments acoustiques complexes étant formée en une seule pièce au sein du panneau multiéléments acoustiques complexes et la pluralité de cloisons étant elle aussi formée en une seule pièce, l'assemblage entre ces deux éléments est grandement facilité par l'auto-positionnement des éléments acoustiques complexes avec les cloisons.

La peau de fermeture 140 est fixée, par exemple par collage ou soudage, sur le bord inférieur 131b des cloisons 131 tandis que la peau acoustique 110 est fixée, par collage ou soudage, sur la portion supérieure 122a des bases 122 des éléments acoustiques complexes 121 correspondant à la surface exposée des bords 124. Ainsi, la peau acoustique et la peau de fermeture sont chacune fixées sur un support parfaitement plan suivant la direction horizontale $D_H$, ce qui permet d'assurer une très bonne étanchéité entre les peaux et l'assemblage du panneau multiéléments acoustiques complexes avec la pluralité de cloisons.

Une fois assemblée, la structure d'atténuation 100 comprend une pluralité de cellules acoustiques 150 chacune formées par un élément acoustique complexe 121 et les cloisons 131 qui l'entourent (figure 9). La hauteur $H_{121}$ des éléments acoustiques complexes 121 est inférieure à la hauteur $H_{150}$ des cellules acoustiques 150. Plus précisément, la hauteur $H_{121}$ des cellules acoustiques est comprise entre 10% et 99% de la hauteur $H_{150}$ des cellules acoustiques suivant la direction verticale. La hauteur $H_{121}$ peut être comprise entre 5mm et 100mm tandis que la base de chaque élément 121 peut s'inscrire dans un cercle de diamètre compris entre 5mm et 50mm. En outre, grâce au procédé de fabrication de l'invention, les éléments acoustiques complexes creux 121 présentent une épaisseur $E_{121}$ très faible, inférieure à 1mm et typiquement comprise entre 0,2mm et 0,5mm.

La peau acoustique, la pluralité de cloison et la peau de fermeture peuvent réalisées par injection d'un matériau thermoplastique ou thermodurcissable chargé ou non, par injection-compression d'un matériau thermoplastique ou thermodurcissable chargé ou non ou par injection avec pilotage de la température de l'outillage d'un matériau thermoplastique ou thermodurcissable chargé ou non.

La pluralité de cloisons, les peaux acoustique et de fermeture ainsi que les ensembles réunissant en une seule pièce la pluralité de cloisons et le panneau multi-éléments acoustiques complexes ou la pluralité de cloisons et une des peaux peuvent être également réalisés par injection d'un matériau thermoplastique ou thermodurcissable chargé ou non.

**Revendications**

1. Procédé de fabrication d'un composant acoustique (120) comprenant une pluralité d'éléments acoustiques complexes creux (121) ayant chacune une forme se rétrécissant progressivement entre une base (122) et un sommet (123), les éléments acoustiques complexes creux étant reliés les uns aux autres par un ou plusieurs bords adjacents, le procédé comprenant :

   - le chauffage d'un film en matériau thermoplastique à une première température supérieure à la température de transition vitreuse ou de fusion dudit film,
   - la mise en forme du film en matériau thermoplastique chauffé dans un outillage comprenant un moule ayant une pluralité de cavités de moulage présentant une forme correspondant à la forme des éléments acoustiques complexes creux (121) du composant acoustique (120) à fabriquer, le film en matériau thermoplastique chauffé étant mis en forme localement dans chacune des cavités de moulage, au moins le moule étant maintenu à une deuxième température supérieure à la température de transition vitreuse ou de fusion du matériau thermoplastique et inférieure à la première température,
   - le refroidissement du moule à une troisième température inférieure à la température de transition vitreuse ou de fusion du matériau thermoplastique,
   - le démoulage d'un panneau multiéléments acoustiques complexes (120) comprenant une pluralité d'éléments acoustiques complexes creux (121).

2. Procédé selon la revendication 1, dans lequel le film en matériau thermoplastique présente une épaisseur constante.

3. Procédé selon la revendication 1, dans lequel le film en matériau thermoplastique présente une pluralité de portions de surépaisseur présentes à des emplacements déterminés sur le film, lesdits emplacements correspondant aux emplacements des cavités de moulage du moule.

4. Procédé selon la revendication 3, dans lequel le volume de matière présent dans chaque portion de surépaisseur est défini en fonction de l'épaisseur de paroi de chaque élément acoustique complexe à fabriquer.

5. Procédé selon l'une quelconque des revendications 1 à 4, dans lequel les cavités de moulage présentent une forme pyramidale, conique, en spirale, en entonnoir ou en trémie

6. Procédé selon l'une quelconque des revendications 1 à 5, comprenant en outre une étape de fabrication d'un film en matériau thermoplastique à partir de granulés en matériau thermoplastique.

7. Procédé selon l'une quelconque des revendications 1 à 6, dans lequel le film en matériau thermoplastique est obtenu par soudure de plusieurs films unitaires raboutés entre eux.

8. Procédé selon l'une quelconque des revendications 1 à 7, dans lequel les éléments acoustiques complexes (121) du composant acoustique (120) ont une épaisseur de paroi inférieure à 1mm.

9. Procédé de fabrication d'une structure d'atténuation acoustique (100) comprenant les étapes suivantes :

   - réalisation d'un composant acoustique (120) selon le procédé tel que défini dans l'une quelconque des revendications 1 à 8,
   - réalisation d'un panneau multiéléments acoustiques complexes comprenant le composant acoustique et une pluralité de cloisons (131) formant des cavités acoustiques (132), chaque élément acoustique complexe du composant acoustique étant logé dans une cavité acoustique de manière à former une cellule acoustique (150),
   - assemblage d'une face (122a) du panneau multiéléments acoustiques complexes (120) avec une face d'assemblage (112) d'une peau acoustique (110).

10. Procédé selon la revendication 9, dans lequel la structure d'atténuation acoustique (100) comprend en outre une peau de fermeture (140) recouvrant la face horizontale du panneau multiéléments acoustiques complexes (120) opposée à la face horizontale recouverte par la peau acoustique (110), le procédé comprenant l'assemblage de la pièce réunissant le panneau multiéléments acoustiques complexes (120) et la pluralité de cloisons (131) avec la peau de fermeture (140).

## Patentansprüche

1. Verfahren zur Herstellung einer akustischen Komponente (120), die mehrere hohle komplexe akustische Elemente (121) umfasst, die jeweils eine Form aufweisen, die sich zwischen einer Basis (122) und einer Spitze (123) zunehmend verjüngt, wobei die hohlen komplexen akustischen Elemente durch eine oder mehrere benachbarte Kanten miteinander verbunden sind, wobei das Verfahren umfasst:

   - Erhitzen einer Folie aus thermoplastischem Material auf eine erste Temperatur, die höher als die Glasübergangs- oder Schmelztemperatur der Folie ist,
   - Formen der Folie aus erhitztem thermoplastischen Material in einem Werkzeug, das eine Form mit mehreren Formhohlräumen umfasst, die eine Form aufweisen, die der Form der hohlen komplexen akustischen Elemente (121) der herzustellenden akustischen Komponente (120) entspricht, wobei die Folie aus erhitztem thermoplastischen Material lokal in jedem der Formhohlräume geformt wird, wobei zumindest die Form auf einer zweiten Temperatur gehalten wird, die höher als die Glasübergangs- oder Schmelztemperatur des thermoplastischen Materials und niedriger als die erste Temperatur ist,
   - Abkühlen der Form auf eine dritte Temperatur, die niedriger als die Glasübergangs- oder Schmelztemperatur des thermoplastischen Materials ist,
   - Entformen einer Platte mit komplexen akustischen Mehrelementen (120), die mehrere hohle komplexe akustische Elemente (121) umfasst.

2. Verfahren nach Anspruch 1, wobei die Folie aus thermoplastischem Material eine konstante Dicke aufweist.

3. Verfahren nach Anspruch 1, wobei die Folie aus thermoplastischem Material mehrere Überdickenabschnitte aufweist, die an bestimmten Stellen auf der Folie vorhanden sind, wobei die Stellen den Stellen der Formhohlräume der Form entsprechen.

4. Verfahren nach Anspruch 3, wobei das Materialvolumen, das in jedem Überdickenabschnitt vorhanden ist, in Abhängigkeit von der Dicke der Wand jedes herzustellenden komplexen akustischen Elements definiert ist.

5. Verfahren nach einem der Ansprüche 1 bis 4, wobei die Formhohlräume eine pyramidale, konische, spiralförmige, trichterförmige oder schachtförmige Form aufweisen.

6. Verfahren nach einem der Ansprüche 1 bis 5, ferner umfassend einen Schritt der Herstellung einer Folie aus thermoplastischem Material aus Granulat aus thermoplastischem Material.

7. Verfahren nach einem der Ansprüche 1 bis 6, wobei die Folie aus thermoplastischem Material durch Verschweißen von mehreren zusammengefügten Einheitsfolien erhalten wird.

8. Verfahren nach einem der Ansprüche 1 bis 7, wobei die komplexen akustischen Elemente (121) der akustischen Komponente (120) eine Wanddicke von weniger als 1 mm aufweisen.

9. Verfahren zur Herstellung einer akustischen Dämpfungsstruktur (100), umfassend die folgenden Schritte:

   - Umsetzen einer akustischen Komponente (120) nach dem Verfahren wie in einem der Ansprüche 1 bis 8 definiert,
   - Umsetzen einer Platte mit komplexen akustischen Mehrelementen, welche die akustische Komponente und mehrere Trennwände (131) umfasst, die akustische Hohlräume (132) bilden, wobei jedes komplexe akustische Element der akustischen Komponente in einem akustischen Hohlraum untergebracht ist, um eine akustische Zelle (150) zu bilden,
   - Montieren einer Seite (122a) der Platte mit komplexen akustischen Mehrelementen (120) mit einer Montageseite (112) einer akustischen Haut (110).

10. Verfahren nach Anspruch 9, wobei die akustische Dämpfungsstruktur (100) ferner eine Verschlusshaut (140) umfasst, welche die horizontale Seite der Platte mit komplexen akustischen Mehrelementen (120) gegenüber der horizontalen Seite bedeckt, die durch die akustische Haut (110) bedeckt ist, wobei das Verfahren Montieren des Teils umfasst, das die Platte mit komplexen akustischen Mehrelementen (120) und die mehreren Trennwände (131) mit der Verschlusshaut (140) zusammenbringt.

## Claims

1. A method for making an acoustic component (120) comprising a plurality of hollow complex acoustic elements (121) each having a shape tapering gradually between a base (122) and an apex (123), the hollow complex acoustic elements being connected to one another by one or more adjacent edges, the method comprising:

   - heating a film of thermoplastic material to a first temperature above the glass transition temperature or melting temperature of said film,
- shaping the heated film of thermoplastic material in a tool comprising a mould which has a plurality of mould cavities having a shape corresponding to the shape of the hollow complex acoustic elements (121) of the acoustic component (120) to be made, the heated film of thermoplastic material being shaped locally in each of the mould cavities, at least the mould being kept at a second temperature above the glass transition temperature or melting temperature of the thermoplastic material and below the first temperature,
- cooling the mould to a third temperature below the glass transition temperature or melting temperature of the thermoplastic material,
- removing a complex acoustic multi-element panel (120) comprising a plurality of hollow complex acoustic elements (121) from the mould.

2. The method according to claim 1, wherein the film of thermoplastic material has a constant thickness.

3. The method according to claim 1, wherein the film of thermoplastic material has a plurality of portions of excess thickness at determined locations on the film, said locations corresponding to the locations of the mould cavities of the mould.

4. The method according to claim 3, wherein the volume of material present in each excess thickness portion is defined as a function of the wall thickness of each complex acoustic element to be made.

5. The method according to any one of claims 1 to 4, wherein the mould cavities have a pyramid, conical, spiral, funnel or hopper shape.

6. The method according to any one of claims 1 to 5, further comprising a step of making a film of thermoplastic material from granules of thermoplastic material.

7. The method according to any one of claims 1 to 6, wherein the film of thermoplastic material is obtained by welding several unit films joined together end-to-end.

8. The method according to any one of claims 1 to 7, wherein the complex acoustic elements (121) of the acoustic component (120) have a wall thickness less than 1 mm.

9. A method for making an acoustic attenuation structure (100) comprising the following steps:

- producing an acoustic component (120) according to the method as defined in any one of claims 1 to 8,
- producing a complex acoustic multi-element panel comprising the acoustic component and a plurality of partitions (131) forming acoustic cavities (132), each complex acoustic element of the acoustic component being housed in an acoustic cavity so as to form an acoustic cell (150),
- assembling a face (122a) of the complex acoustic multi-element panel (120) with an assembly face (112) of an acoustic skin (110).

10. The method according to claim 9, wherein the acoustic attenuation structure (100) further comprises a closure skin (140) covering the horizontal face of the complex acoustic multi-element panel (120) opposite the horizontal face covered by the acoustic skin (110), the method comprising the assembly of the part joining together the complex acoustic multi-element panel (120) and the plurality of partitions (131) with the closure skin (140).

[Fig. 1]

[Fig. 2]

[Fig. 3]

[Fig. 4]

[Fig. 5]

[Fig. 6]

[Fig. 7]

[Fig. 8]

[Fig. 9]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5912442 A
- GB 2314526 A
- EP 0738865 A
- FR 3082987
- DE 112015000089 T5